# EUROPEAN PATENT SPECIFICATION

(11) **EP 3 832 366 B1**
(45) Date of publication and mention of the grant of the patent: **26.11.2025**
(21) Application number: 20847518.6
(22) Date of filing: 18.03.2020
(51) Int. Cl.: G02B 6/44

(54) **TERMINAL BOX**
ANSCHLUSSKASTEN
BOÎTE À BORNES

(30) Priority: 29.07.2019 CN 201910690867
(43) Date of publication of application: 09.06.2021
(73) Proprietor: HUAWEI TECHNOLOGIES CO., LTD., Shenzhen, Guangdong 518129 (CN)
(72) Inventor: ZHANG, Zhijian, Shenzhen, Guangdong 518129 (CN); CHEN, Yangquan, Shenzhen, Guangdong 518129 (CN); WANG, Wei, Shenzhen, Guangdong 518129 (CN); YIN, Weiwei, Shenzhen, Guangdong 518129 (CN)
(74) Representative: Pfenning, Meinig & Partner mbB
(86) International application number: PCT/CN2020/080072
(87) International publication number: WO 2021/017490

(56) References cited:
- CN-A- 102 159 047
- CN-A- 102 159 047
- CN-A- 102 692 689
- CN-A- 104 509 001
- CN-A- 110 568 572
- CN-U- 201 716 449
- CN-U- 202 661 689
- CN-U- 203 054 312
- CN-U- 206 339 706
- US-A1- 2009 091 898
- US-A1- 2009 091 898
- US-A1- 2011 052 132
- US-A1- 2018 341 079

## Description

### TECHNICAL FIELD

This application relates to the field of communications technologies, and in particular, to a terminal box.

### BACKGROUND

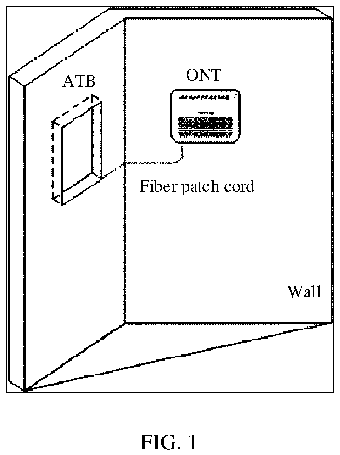

At present, most users have copper pipes embedded inside walls and junction boxes and telephone or power sockets are equipped inside the walls. With the development of FTTH, the telephone or power sockets are to be replaced by fiber sockets. Therefore, when optical fibers are directly connected to homes, the users require direct access through perforation of existing pipes and concealed boxes to avoid re-drilling and mounting of new concealed boxes. As shown in FIG. 1, an ATB (Access Terminal Box, access terminal box) can be mounted after an original telephone or power socket is removed. Then, an ONT (Optical Network Termination, optical network terminal) is mounted on a wall near the ATB, and the ATB is connected to the ONT by using a fiber patch cord. In this mounting manner, a lot of space (at least two boxes) on the wall is occupied, the wall is damaged (a mounting hole needs to be drilled for the ONT), and exposure of the fiber patch cord (there is a fiber patch cord between the ATB and the ONT) is unsightly.

CN 102159047A discloses a mounting box body used for containing and fixing an electronic device. The mounting box body comprises a mounting base and a cover body which is matched with the mounting base. The mounting base comprises a mounting plate and a plurality of fasteners, a plurality of meshes are arranged on the mounting plate, one ends of the fasteners are fastened and fixed with the mounting plate through the meshes, and the other ends of the fasteners project out of the mounting plate and support against the side surface of the electronic device.

US 2009/091898 A1 discloses a multimedia enclosure having a housing with a base, a first sidewall and a second sidewall oppositely disposed from the first sidewall. The base and the first and second sidewalls define an interior region having an optical network terminal mounting area. An optical network terminal mounting area is disposed on the base of the housing in the interior region. A first radius limiter and a second radius limiter are disposed on the second sidewall with the first and second radius limiters defining a fiber passage into the interior region.

### SUMMARY

The invention is set out in the appended set of claims.

This application provides a terminal box, to facilitate mounting of an access terminal box.

The terminal box inter alia includes a box body.

A mounting area and an accommodation area are provided in the box body, and the mounting area and the accommodation area are arranged side by side on a bottom wall of the box body.

The mounting area is used to accommodate an optical network terminal.

A fixing post for fastening the optical network terminal is disposed in the mounting area, and during assembly, the optical network terminal may be directly hung on the fixing post for fastening. During disposal, the optical network terminal also needs to be connected to another optical fiber, to be connected to another device outside the terminal box.

The cover plate includes a first cover plate covering the mounting area and a second cover plate covering the accommodation area. Through partitioned closing, different areas may be opened as required during use.

In a specific implementable solution, a height of a second winding post is less than a height of the optical network terminal assembled in the box body, so that space in the box body can be properly utilized.

According to the invention, the second winding post is also used as a structure for supporting the optical network terminal, thereby improving stability of the optical network terminal.

The first cover plate is rotatably connected to the box body, and the first cover plate is locked at a closed position with the box body by using a threaded connection structure. After being assembled, the optical network terminal is seldom moved. Therefore, the first cover plate is fastened in a lockable manner.

In a specific implementable solution, a through hole corresponding to an indicator of the optical network terminal is provided on the first cover plate. This facilitates observation of a running status of the optical network terminal.

According to the invention, the second cover plate is rotatably connected to the box body, and the second cover plate is locked at a closed position with the box body by using a buckle. This facilitates opening and closing of the second cover plate.

A limiting protrusion is disposed on the first cover plate, and a limiting notch that fits the limiting protrusion is disposed on the second cover plate. When the first cover plate and the second cover plate are closed, the limiting protrusion is located in the limiting notch. This improves stability of the second cover plate.

A first threading hole is disposed on the box body, there are two connection structures, and the connection structures are separately arranged on two sides of the first threading hole. During assembly, an optical fiber in the concealed box can directly pass through the first threading hole into the box body, thereby facilitating a connection between the optical fiber and the optical network terminal.

A second winding post is disposed in the mounting area. An optical fiber extending out of the concealed box may be wound around the second winding post, and then an end is connected to

In a specific implementable solution, a wiring groove is provided between the first threading hole and the second winding post. In this way, cabling of the optical fiber is limited, thereby facilitating winding of the optical fiber.

In a specific implementable solution, a second threading hole is provided on a side wall of the box body, and an optical fiber wound around the first winding post is capable of passing through the second threading hole to be exposed outside the box body. This facilitates a connection between another optical fiber connected to the optical network terminal and another device.

In a specific implementable solution, a plurality of heat dissipation holes are provided on the box body, and the heat dissipation holes are separately arranged on two sides of the second winding post. This improves a working environment of the optical network terminal.

According to the invention, the connection structures are separately arranged on two sides of the first threading hole. This facilitates penetration of the optical fiber into the box body.

In a specific implementable solution, a separation distance between the two connection structures matches a size of a mounting structure that is disposed on the wall and that is connected to the terminal box in a fitting manner. This facilitates a connection between the connection structure, and the concealed box and the terminal box on the wall.

### BRIEF DESCRIPTION OF DRAWINGS

FIG. 1 is a schematic diagram of mounting of an optical network terminal and an access terminal box in the prior art;
FIG. 2 is a schematic structural diagram of a terminal box according to an embodiment of this application;
FIG. 3 is a schematic diagram of fitting of an optical network terminal and a terminal box according to an embodiment of this application; and
FIG. 4 is a schematic diagram of fixing a terminal box to a wall according to an embodiment of this application.

### DESCRIPTION OF EMBODIMENTS

To make the objectives, technical solutions, and advantages of this application clearer, the following further describes this application in detail with reference to the accompanying drawings.

First, several concepts are described.

An 86-type box is a junction box specification and is also an industry standard in electrical decoration. For example, a box inside a wall for a light switch in a house is a junction box, and the junction box is divided into a base box and a panel. Base boxes are basically the same, but panels vary with different brands and different models. However, the base boxes and the panels may be all mounted in 86-type boxes of a same specification. A concealed box below is a base box of the 86-type box.

An optical network terminal (commonly known as an optical modem) is a network device that performs transmission by using an optical fiber medium and modulates and demodulates an optical signal into another protocol signal. An optical modem device is used as a relay transmission device in a large local area network, a metropolitan area network, and a wide area network. A difference between the optical modem device and an optical fiber transceiver lies in that the optical fiber transceiver only receives and emits light, and does not perform protocol conversion.

An access terminal box is a termination connector of an optical cable. One end of the access terminal box is an optical cable, and the other end is a pigtail. The access terminal box is equivalent to a device that splits an optical cable into a single optical fiber. A user optical cable terminal box mounted on a wall is used to provide fusion splicing between optical fibers, fusion splicing between an optical fiber and a pigtail, and a cross-connection of an optical connector, provide mechanical protection and environmental protection for an optical fiber and an element of the optical fiber, and allow proper inspection to maintain highest-standard optical fiber management.

To facilitate understanding of a terminal box provided in the embodiments of this application, an application scenario of the terminal box provided in the embodiments of this application is first described. The terminal box provided in the embodiments of this application is applied indoors, especially to an 86-type box in an old house. The 86-type box includes an electric wire and an optical fiber. In the prior art, when an optical network terminal is mounted, the optical fiber needs to be led out from the 86-type box, and then an access terminal box is fastened on a base box of the 86-type box. Then, the optical network terminal is mounted at another indoor position, and the access terminal box is connected to the optical network terminal by using a fiber patch cord. This disposal manner requires relatively large space, and exposure of the fiber patch cord affects interior appearance. Therefore, the embodiments of this application provide a terminal box.

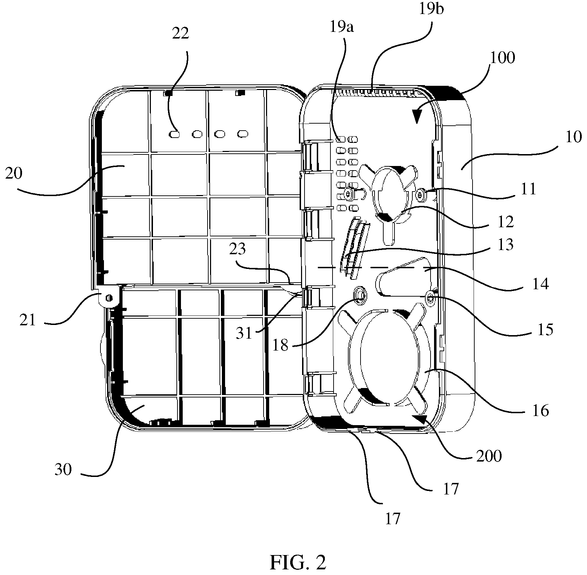

The terminal box provided in the embodiments of this application is used together with a concealed box. FIG. 2 shows a specific structure of the terminal box provided in the embodiments of this application. The terminal box includes a box body 10. The box body 10 is a rectangular box body 10, and has accommodation space inside. The accommodation space is divided into two parts based on functions: a mounting area 100 and an accommodation area 200, and the mounting area 100 and the accommodation area 200 are arranged side by side.

Still referring to FIG. 2, the mounting area 100 is first described, and the mounting area 100 is used to accommodate an optical network terminal. A fixing post 11 for fastening the optical network terminal is disposed in the mounting area 100. As shown in FIG. 2, there are two fixing posts 11, and a separation distance between the two fixing posts 11 matches a hanging hole of the optical network terminal. When the optical network terminal is fastened, the hanging hole of the optical network terminal is a gourd-shaped hanging hole with a smaller upper part and a larger lower part, and a protrusion that fits the hanging hole is disposed at an end of the fixing post 11. When the optical network terminal is fastened, the protrusion is inserted into a larger hole below, and then the optical network terminal is moved. The fixing post 11 slides into a smaller hole, and the protrusion is clamped in the hole, to fasten the optical network terminal. It should be understood that a quantity of fixing posts 11 and a shape of the fixing post 11 are not limited to the quantity and the shape shown in FIG. 2. When a structure for fastening on the optical network terminal changes, the fixing post 11 changes accordingly, as long as the optical network terminal can be fastened.

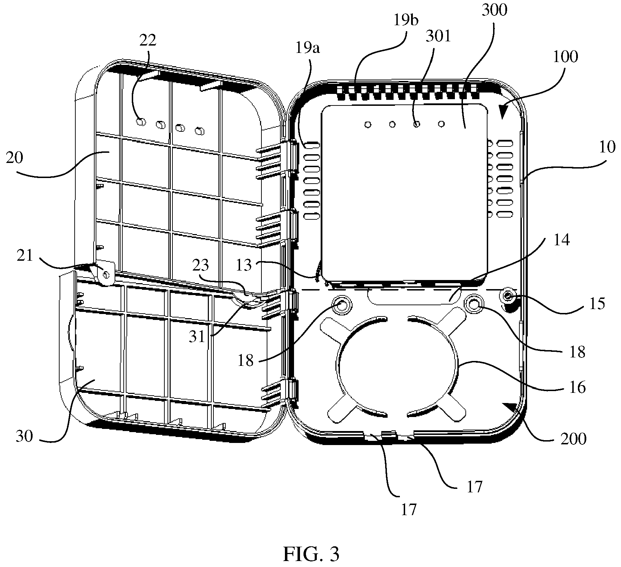

Referring to both FIG. 2 and FIG. 3, FIG. 3 is a schematic diagram of assembly of an optical network terminal and a terminal box. When an optical network terminal 300 is mounted in the box body 10, the optical network terminal 300 is fastened in the mounting area 100 by using the fixing post 11. In addition, a plurality of heat dissipation holes 19a that fit the optical network terminal 300 are provided in the box body 10. As shown in FIG. 2 and FIG. 3, the plurality of heat dissipation holes 19a are disposed on a bottom wall of the box body 10, and are disposed in a plurality of rows. During arrangement, the plurality of rows of heat dissipation holes 19a are separately arranged on two sides of the optical network terminal 300. When the optical network terminal 300 is fastened in the mounting area 100, the plurality of heat dissipation holes 19a dissipate heat for the optical network terminal 300, thereby improving a working environment of the optical network terminal 300. In addition, a heat dissipation protrusion 19b is further disposed on a side wall of the box body 10 to dissipate heat for the optical network terminal 300. A plurality of heat dissipation protrusions 19b face the optical network terminal 300, and may transfer heat to the outside of the box body 10, thereby improving the working environment of the optical network terminal 300.

Still referring to FIG. 2, a first threading hole 14 for allowing an optical fiber to pass therethrough is further provided in the box body 10. The optical fiber is an optical fiber extending out of the concealed box. For ease of description, the optical fiber is named as a first optical fiber. When the first threading hole 14 is specifically provided, the first threading hole 14 is provided on the bottom wall of the box body 10, and may be specifically provided in the accommodation area 200 or the mounting area 100, or between the mounting area 100 and the accommodation area 200. As shown in FIG. 2, the first threading hole 14 is a long waist-shaped hole with one larger end and another smaller end, and a maximum pore size of the long waist-shaped hole is greater than a size of the first optical fiber, to facilitate insertion of the first optical fiber. Still referring to FIG. 2, a second winding post 12 for winding the first optical fiber is further disposed in the mounting area 100, and the second winding post 12 is located between the two fixing posts 11 and is also located between the plurality of rows of heat dissipation holes 19a.

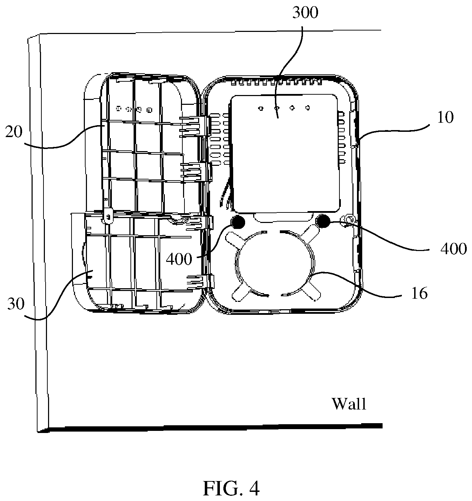

The second winding post 12 includes a cylinder structure fastened on the bottom wall of the box body 10, and three support arms fixedly connected to the cylinder structure and used for clamping the first optical fiber. The three support arms are evenly arranged around the cylinder structure. Referring to both FIG. 3 and FIG. 4, when the second winding post 12 is specifically disposed, a height of the second winding post 12 is less than a height at which the optical network terminal is assembled in the box body 10, so that space in the box body 10 can be properly utilized. A lower part of the mounting area 100 is used to wind the first optical fiber, and an upper part is used to accommodate the optical network terminal. In addition, the second winding post 12 may also be used as a structure for supporting the optical network terminal. During specific support, the three support arms of the second winding post 12 may be used to press against a lower part of the optical network terminal, to improve stability of the optical network terminal.

Still referring to FIG. 2, a wiring groove 13 is provided between the first threading hole 14 and the second winding post 12. Two baffles are disposed on the bottom wall of the box body 10, the two baffles are obliquely disposed relative to the side wall of the box body 10, and the wiring groove 13 is formed between the two baffles. When the first optical fiber is inserted into the box body 10 from the first threading hole 14, the first optical fiber first passes through the wiring groove 13, and then is wound around the second winding post 12. After the redundant first optical fiber is wound around the second winding post 12, the first optical fiber is connected to the optical network terminal. As shown in FIG. 2, when the first optical fiber that penetrates out of the first threading hole 14 is inserted into the wiring groove 13, one end of the wiring groove 13 leans towards the side wall of the box body 10, and the other end leans towards the second winding post 12 along a direction in which the first optical fiber is inserted.

Referring to FIG. 3, it can be learned from FIG. 3 that, when the optical network terminal 300 is fastened in the mounting area 100, one end that is of the first optical fiber and that is first inserted into the wiring groove 13 is exposed on one side of the optical network terminal 300. In this way, the first optical fiber avoids a bottom area of the optical network terminal 300, and the bottom area of the optical network terminal 300 is a connection area used by the optical network terminal 300 to plug the first optical fiber. A cabling direction of the first optical fiber in the mounting area 100 is limited through fitting of the first threading hole 14, the wiring groove 13, and the second winding post 12, thereby avoiding the connection area of the optical network terminal 300, to facilitate a connection between another optical fiber and the optical network terminal 300.

Referring to both FIG. 3 and FIG. 4, when the terminal box is connected to the concealed box, a connection structure 18 for hanging on a wall is disposed on the box body 10. Specifically, the connection structure 18 is configured to connect to the concealed box. As shown in FIG. 2, the connection structure 18 is located in the accommodation area 200, there are two connection structures 18, and a separation distance between the two connection structures 18 matches a size of a mounting structure that is disposed on the wall and that is connected to the terminal box in a fitting manner. In this embodiment, the mounting structure includes two mounting holes on the concealed box. The separation distance between the two connection structures 18 is equal to a mounting distance between the two mounting holes on the concealed box, to facilitate a connection between the terminal box and the concealed box. Still referring to FIG. 3, the two connection structures 18 are separately arranged on two sides of the first threading hole 14, and are relatively close to the first threading hole 14. When the foregoing structure is used, the first threading hole 14 is located between the two connection structures 18, and is relatively close to the two connection structures 18. Therefore, it can be ensured that the first optical fiber can conveniently pass through the first threading hole 14 into the box body when the box body 10 is fixedly connected to the concealed box. In addition, when the connection structure 18 is specifically disposed, the connection structure 18 is disposed on the bottom wall of the box body 10, and may be specifically disposed in the accommodation area 200 or the mounting area 100, or between the mounting area 100 and the accommodation area 200.

Still referring to FIG. 2, the two connection structures 18 in FIG. 2 are through holes provided on the bottom wall of the box body 10. A separation distance between the two through holes fits a threaded hole on the concealed box. When the box body 10 needs to be fastened, as shown in FIG. 4, a threaded connector 400 (a screw or a bolt) passes through the through hole and is connected to the threaded hole on the concealed box, to fasten the box body 10 on the concealed box. Certainly, the connection structure 18 provided in this embodiment of this application is not limited to the foregoing through hole. When a connection structure in the concealed box changes, the corresponding connection structure 18 for the box body 10 changes accordingly.

After the optical network terminal is fastened in the box body, the optical network terminal needs to be connected to another device by using an optical fiber. For ease of description, the optical fiber for connecting the optical network terminal to the another device is named a second optical fiber. During use, the second optical fiber may be excessively long. Therefore, the accommodation area is further provided in the box body provided in this embodiment of this application. Still referring to FIG. 2, a placement direction of the terminal box shown in FIG. 2 is used as a reference direction, and the accommodation area 200 is located below the mounting area 100. A first winding post 16 is disposed in the accommodation area 200. The first winding post 16 includes a cylinder structure fastened on the bottom wall of the box body 10, and four support arms fixedly connected to the cylinder structure and configured to clamp the second optical fiber. The four support arms are evenly arranged around the cylinder structure.

Still referring to FIG. 2, a height of the first winding post 16 may be greater than or equal to the height of the second winding post 12. In the structure shown in FIG. 2, the height of the first winding post 16 is greater than the height of the second winding post 12. Referring to FIG. 3, when the optical network terminal is fastened in the box body 10, the first winding post 16 is located below the optical network terminal 300. After being connected to a connection area at the bottom of the optical network terminal 300, the second optical fiber may be directly wound around the first winding post 16. In addition, a second threading hole 17 is provided on the side wall of the box body 10, and an optical outside the box body 10.

As shown in FIG. 2, the second threading hole 17 is located on a side wall at the bottom of the box body 10, and the second optical fiber wound from the first winding post 16 may directly penetrate out of the second threading hole 17. In FIG. 2, there are two second threading holes 17. When there is an electric wire in the concealed box, the electric wire may be inserted into the box body 10 through the first threading hole 14, wound around the first winding post 16, and then penetrate out of another second threading hole 17. That is, in the second threading holes 17 shown in FIG. 3, one second threading hole 17 is configured to allow the second optical fiber to pass therethrough, and the other second threading hole 17 is configured to allow the electric wire to pass therethrough. Certainly, the foregoing is merely an example, and the two second threading holes 17 may alternatively be used for allowing the second optical fiber to pass therethrough.

When the structure (for example, the second winding post 12, the first winding post 16, and the wiring groove 13) in the box body 10 is prepared, the structure may be integrally prepared and formed with the box body 10. Certainly, the structure may alternatively be fastened in the box body 10 in a welding or bonding manner.

Still referring to FIG. 2, the terminal box provided in the embodiments of this application further includes a cover plate. The cover plate is detachably and fixedly connected to the box body 10, and may cover the mounting area 100 and the accommodation area 200. According to the invention, and as shown in FIG. 2, the cover plate includes a first cover plate 20 and a second cover plate 30, the first cover plate 20 covering the mounting area 100, and the second cover plate 30 covering the accommodation area 200.

Still referring to FIG. 2, the first cover plate 20 is rotatably connected to the box body 10, and the first cover plate 20 is locked at a closed position with the box body 10 by using a threaded connection structure 18. As shown in FIG. 2, a connection post 15 is disposed in the box body 10, and a threaded hole is provided on the connection post 15. A protrusion 21 that fits the connection post 15 is disposed on the first cover plate 20, and a through hole is provided on the protrusion 21. When the first cover plate 20 is closed on the box body 10, the protrusion 21 is pressed against the connection post 15, and then passes through the through hole by using a threaded connector (a bolt or a screw) and is screwed into the threaded hole, to lock the first cover plate 20 and the box body 10 at the closed position. However, after being assembled, the optical network terminal is seldom moved. Therefore, the first cover plate 20 is fastened in a lockable manner. In addition, the optical network terminal may be fastened through fitting of the second winding post 12, the fixing post 11, and the first cover plate 20, thereby ensuring stability of the optical network terminal. Still referring to FIG. 3, an indicator 301 for indicating a working status of the optical network terminal is disposed in the optical network terminal. To facilitate observation of the working status of the optical network terminal, a through hole 22 corresponding to the indicator 301 of the optical network terminal 300 is provided on the first cover plate 20. Therefore, a running status of the optical network terminal 300 can be learned of without opening the first cover plate 20.

When the first cover plate 20 covers the mounting area 100, because the connection area of the optical network terminal 300 is at the bottom and faces the accommodation area 200, the optical network terminal can be mounted without opening the first cover plate 20 when another optical fiber is connected to the optical network terminal 300. Still referring to FIG. 2, the second cover plate 30 is also rotatably connected to the box body 10, and the second cover plate 30 is locked at a closed position with the box body 10 by using a buckle. The second cover plate 30 covers the accommodation area 200, the accommodation area 200 is used to accommodate an optical fiber, and there is a case in which the optical fiber is to be replaced or another optical fiber is to be connected. Therefore, the second cover plate 30 and the box body 10 are locked at the closed position by using the buckle, and the second cover plate 30 can be directly opened when the optical fiber needs to be replaced or another optical fiber needs to be connected.

Still referring to FIG. 2, when the first cover plate 20 fits the second cover plate 30, a limiting protrusion 23 is disposed on the first cover plate 20, and a limiting notch 31 that fits the limiting protrusion 23 is provided on the second cover plate 30. When the first cover plate 20 and the second cover plate 30 are closed, the limiting protrusion 23 is located in the limiting notch 31. This improves stability of the second cover plate 30. As shown in FIG. 2, the limiting protrusion 23 is disposed on a side wall that is of the first cover plate 20 and that is close to the second cover plate 30, the limiting notch is located on a side wall that is of the second cover plate 30 and that is close to the first cover plate 20, and the limiting protrusion 23 is located below the limiting notch 31. When the first cover plate 20 and the second cover plate 30 are closed, the second cover plate 30 is pressed against the first cover plate 20, and the limiting notch 31 is pressed against the limiting protrusion 23, to support the second cover plate 30 by using the first cover plate 20. In addition, when the protrusion 21 is disposed on the first cover plate 20, the protrusion 21 is also located below the second cover plate 30, and may be made into the second cover plate 30. Through support of the first cover plate 20, the side wall that is of the second cover plate 30 and that is close to the first cover plate 20 is prevented from being suspended, thereby improving stability of the second cover plate 30.

In a non-claimed comparative example, an integral cover plate may alternatively be used to cover the accommodation area 200 and the mounting area 100.

It can be learned from the foregoing description that, the terminal box provided in the embodiments of this application can not only implement storage, termination (new construction), and splicing (for repairing) and connection of an optical cable, but also have the built-in optical network terminal. The two functions have independent operation interfaces, so that fiber termination and separate mounting and synchronous mounting of the optical network terminal can be implemented during user access, thereby greatly resolving a problem of mutual interference in a maintenance operation process. In addition, problems of intricate interleaving of a plurality of cables, and inconvenient operation and management are avoided, thereby facilitating use and management. When a user subscribes to a service, the user only needs to mount the access terminal box on the original concealed box. In this way, mounting is simple and efficient, and the wall is neat and sightly.

The foregoing descriptions are merely specific implementations of this application, but are not intended to limit the protection scope of this application. The protection scope of this application shall be subject to the protection scope of the claims.

## Claims

1. A terminal box, comprising a box body (10), wherein a mounting area (100) configured to accommodate an optical network terminal (300) and an accommodation area (200) are provided in the box body (10), and the mounting area (100) and the accommodation area (200) are arranged side by side on a bottom wall of the box body (10);
a fixing post (11), disposed in the mounting area (100) and configured to fasten the optical network terminal (300);
a first winding post (16), disposed in the accommodation area (200) and configured to wind a second optical fiber;
a second winding post (12), disposed in the mounting area (100) and configured to wind a first optical fiber, wherein the second winding post (12) includes a cylinder structure fastened on the bottom wall of the box body (10) and three support arms fixedly connected to the cylinder structure and configured for clamping the first optical fiber, and is further used as a structure for supporting the optical network terminal (300);
a cover plate, detachably and fixedly connected to the box body (10), wherein the cover plate covers the mounting area (100) and the accommodation area (200); and
a first threading hole (14), disposed on the box body (10) and configured to allow the first optical fiber to pass therethrough,
wherein there are two connection structures (18) disposed on the box body (10) and configured to hang on a wall, and the connection structures (18) are separately arranged on two sides of the first threading hole (14),
wherein the cover plate comprises a first cover plate (20) covering the mounting area (100) and a second cover plate (30) covering the accommodation area (200),
wherein the first cover plate (20) is rotatably connected to the box body (10), and the first cover plate (20) is locked at a closed position with the box body (10) by using a threaded connection structure (18), wherein a connection post (15) is disposed in the box body (10), and a threaded hole is provided on the connection post (15), wherein a protrusion (21) that fits the connection post (15) is disposed on the first cover plate (20), and a first through hole is provided on the protrusion (21),
wherein the second cover plate (30) is rotatably connected to the box body (10), and the second cover plate (30) is locked at a closed position with the box body (10) by using a buckle, and
wherein a limiting protrusion (23) is disposed on the first cover plate (20), and a limiting notch (31) that fits the limiting protrusion (23) is disposed on the second cover plate (30); and when the first cover plate (20) and the second cover plate (30) are closed, the limiting protrusion (23) is located in the limiting notch (31).

2. The terminal box according to claim **1,** wherein a second through hole (22) corresponding to an indicator of the optical network terminal (300) is provided on the first cover plate (20).

3. The terminal box according to claim 1 or claim 2, wherein a wiring groove (13) is provided between the first threading hole (14) and the second winding post (12).

4. The terminal box according to claim 1 or claim 2, wherein a second threading hole (17) is provided on a side wall of the box body (10), and the second optical fiber wound around the first winding post (16) is capable of passing through the second threading hole (17) to be exposed outside the box body (10).

5. The terminal box according to claim 1 or claim 2, wherein a plurality of heat dissipation holes (19a) are provided on the box body (10), and the heat dissipation holes (19a) are separately arranged on two sides of the second winding post (12).

6. The terminal box according to claim 1 or claim 2, wherein a separation distance between the two connection structures (18) matches a size of a mounting structure that is disposed on the wall and that is connected to the terminal box in a fitting manner.

## Patentansprüche

1. Anschlusskasten, umfassend einen Kastenkörper (10), wobei in dem Kastenkörper (10) ein Montagebereich (100), der dazu konfiguriert ist, einen optischen Netzwerkanschluss (300) aufzunehmen, und ein Aufnahmebereich (200) bereitgestellt sind und der Montagebereich (100) und der Aufnahmebereich (200) nebeneinander an einer Bodenwand des Kastenkörpers (10) angeordnet sind;
einen Befestigungspfosten (11), der in dem Montagebereich (100) angeordnet und dazu konfiguriert ist, den optischen Netzwerkanschluss (300) zu befestigen;
einen ersten Wickelpfosten (16), der in dem Aufnahmebereich (200) angeordnet und dazu konfiguriert ist, eine zweite optische Faser aufzuwickeln;
einen zweiten Wickelpfosten (12), der in dem Montagebereich (100) angeordnet und dazu konfiguriert ist, eine erste optische Faser aufzuwickeln, wobei der zweite Wickelpfosten (12) eine an der Bodenwand des Kastenkörpers (10) befestigte Zylinderkonstruktion und drei Stützarme beinhaltet, die fest mit der Zylinderkonstruktion verbunden und dazu konfiguriert sind, die erste optische Faser festzuklemmen, und ferner als Konstruktion zum Stützen des optischen Netzwerkanschlusses (300) verwendet wird;
eine Abdeckplatte, die lösbar und fest mit dem Kastenkörper (10) verbunden ist, wobei die Abdeckplatte den Montagebereich (100) und den Aufnahmebereich (200) abdeckt; und
eine erste Gewindebohrung (14), die an dem Kastenkörper (10) angeordnet und dazu konfiguriert ist, der ersten optischen Faser zu ermöglichen, hindurchgeführt zu werden,
wobei zwei Verbindungskonstruktionen (18) vorhanden sind, die an dem Kastenkörper (10) angeordnet und dazu konfiguriert sind, an einer Wand aufgehängt zu werden, und die Verbindungskonstruktionen (18) getrennt an zwei Seiten der ersten Gewindebohrung (14) angeordnet sind,
wobei die Abdeckplatte eine erste den Montagebereich (100) abdeckende Abdeckplatte (20) und eine zweite den Aufnahmebereich (200) abdeckende Abdeckplatte (30) umfasst,
wobei die erste Abdeckplatte (20) drehbar mit dem Kastenkörper (10) verbunden ist und die erste Abdeckplatte (20) in einer geschlossenen Position mit dem Kastenkörper (10) durch Verwendung einer Gewindeverbindungskonstruktion (18) verriegelt ist, wobei ein Verbindungspfosten (15) in dem Kastenkörper (10) angeordnet ist und an dem Verbindungspfosten (15) eine Gewindebohrung bereitgestellt ist, wobei ein zu dem Verbindungspfosten (15) passender Vorsprung (21) an der ersten Abdeckplatte (20) angeordnet ist und eine erste Durchgangsbohrung an dem Vorsprung (21) bereitgestellt ist,
wobei die zweite Abdeckplatte (30) drehbar mit dem Kastenkörper (10) verbunden ist und die zweite Abdeckplatte (30) in einer geschlossenen Position mit dem Kastenkörper (10) durch Verwendung einer Schließe verriegelt ist und
wobei an der ersten Abdeckplatte (20) ein Begrenzungsvorsprung (23) angeordnet ist und an der zweiten Abdeckplatte (30) eine zu dem Begrenzungsvorsprung (23) passende Begrenzungskerbe (31) angeordnet ist; und sich der Begrenzungsvorsprung (23) in der Begrenzungskerbe (31) befindet, wenn die erste Abdeckplatte (20) und die zweite Abdeckplatte (30) geschlossen sind.

2. Anschlusskasten nach Anspruch 1, wobei an der ersten Abdeckplatte (20) eine zweite einer Anzeige des optischen Netzwerkanschlusses (300) entsprechende Durchgangsbohrung (22) bereitgestellt ist.

3. Anschlusskasten nach Anspruch 1 oder Anspruch 2, wobei zwischen der ersten Gewindebohrung (14) und dem zweiten Wicklungspfosten (12) eine Drahtnut (13) bereitgestellt ist.

4. Anschlusskasten nach Anspruch 1 oder Anspruch 2, wobei an einer Seitenwand des Kastenkörpers (10) eine zweite Gewindebohrung (17) bereitgestellt ist und die um den ersten Wickelpfosten (16) gewickelte zweite optische Faser durch die zweite Gewindebohrung (17) geführt werden kann, um außerhalb des Kastenkörpers (10) freigelegt zu werden.

5. Anschlusskasten nach Anspruch 1 oder Anspruch 2, wobei eine Vielzahl von Wärmeableitungsbohrungen (19a) an dem Kastenkörper (10) bereitgestellt ist und die Wärmeableitungsbohrungen (19a) getrennt auf zwei Seiten des zweiten Wicklungspfostens (12) angeordnet sind.

6. Anschlusskasten nach Anspruch 1 oder Anspruch 2, wobei eine Abstandsstrecke zwischen den zwei Anschlusskonstruktionen (18) einer Größe einer an der Wand angeordneten und mit dem Anschlusskasten verbundenen Montagekonstruktion entspricht.

## Revendications

1. Boîte à bornes, comprenant un corps de boîte (10), dans laquelle une zone de montage (100) configurée pour accueillir une borne de réseau optique (300) et une zone d'accueil (200) sont prévues dans le corps de boîte (10), et la zone de montage (100) et la zone d'accueil (200) sont agencées côte à côte sur une paroi inférieure du corps de boîte (10) ;
un poteau de fixation (11), disposé dans la zone de montage (100) et configuré pour fixer la borne de réseau optique (300) ; un premier poteau d'enroulement (16), disposé dans la zone d'accueil (200) et configuré pour enrouler une seconde fibre optique ;
un second poteau d'enroulement (12), disposé dans la zone de montage (100) et configuré pour enrouler une première fibre optique, dans laquelle le second poteau d'enroulement (12) comporte une structure cylindrique fixée sur la paroi inférieure du corps de boîte (10) et trois bras de support reliés de manière fixe à la structure cylindrique et configurés pour serrer la première fibre optique, et est également utilisé comme structure pour supporter la borne de réseau optique (300) ;
une plaque de recouvrement, reliée de manière amovible et fixe au corps de boîte (10), dans laquelle la plaque de recouvrement recouvre la zone de montage (100) et la zone d'accueil (200) ; et
un premier trou de filetage (14), disposé sur le corps de boîte (10) et configuré pour permettre le passage de la première fibre optique à travers celui-ci,
dans laquelle il y a deux structures de connexion (18) disposées sur le corps de boîte (10) et configurées pour être accrochées à un mur, et les structures de connexion (18) sont agencées séparément sur deux côtés du premier trou de filetage (14),
dans laquelle la plaque de recouvrement comprend une première plaque de recouvrement (20) recouvrant la zone de montage (100) et une seconde plaque de recouvrement (30) recouvrant la zone d'accueil (200),
dans laquelle la première plaque de recouvrement (20) est reliée de manière rotative au corps de boîte (10), et la première plaque de recouvrement (20) est verrouillée en position fermée avec le corps de boîte (10) à l'aide d'une structure de connexion filetée (18), dans laquelle un poteau de connexion (15) est disposé dans le corps de boîte (10), et un trou fileté est prévu sur le poteau de connexion (15), dans laquelle une saillie (21) qui s'adapte au poteau de connexion (15) est disposée sur la première plaque de recouvrement (20), et un premier trou traversant est prévu sur la saillie (21),
dans laquelle la seconde plaque de recouvrement (30) est reliée de manière rotative au corps de boîte (10), et la seconde plaque de recouvrement (30) est verrouillée en position fermée avec le corps de boîte (10) à l'aide d'une boucle, et
dans laquelle une saillie de limitation (23) est disposée sur la première plaque de recouvrement (20), et une encoche de limitation (31) qui s'adapte à la saillie de limitation (23) est disposée sur la seconde plaque de recouvrement (30) ; et lorsque la première plaque de recouvrement (20) et la seconde plaque de recouvrement (30) sont fermées, la saillie de limitation (23) est située dans l'encoche de limitation (31).

2. Boîte à bornes selon la revendication 1, dans laquelle un second trou traversant (22) correspondant à un indicateur de la borne de réseau optique (300) est prévu sur la première plaque de recouvrement (20).

3. Boîte à bornes selon la revendication 1 ou la revendication 2, dans laquelle une rainure de câblage (13) est prévue entre le premier trou de filetage (14) et le second poteau d'enroulement (12).

4. Boîte à bornes selon la revendication 1 ou la revendication 2, dans laquelle un second trou de filetage (17) est prévu sur une paroi latérale du corps de boîte (10), et la seconde fibre optique enroulée autour du premier poteau d'enroulement (16) est capable de passer à travers le second trou de filetage (17) pour être exposée à l'extérieur du corps de boîte (10).

5. Boîte à bornes selon la revendication 1 ou la revendication 2, dans laquelle une pluralité de trous de dissipation de chaleur (19a) sont prévus sur le corps de boîte (10), et les trous de dissipation de chaleur (19a) sont agencés séparément sur deux côtés du second poteau d'enroulement (12).

6. Boîte à bornes selon la revendication 1 ou la revendication 2, dans laquelle une distance de séparation entre les deux structures de connexion (18) correspond à une taille d'une structure de montage qui est disposée sur le mur et qui est reliée à la boîte à bornes de manière ajustée.
